# EUROPEAN PATENT APPLICATION

(11) **EP 4 832 070 A1**
(43) Date of publication of application: **28.10.2026**
(21) Application number: 25848903.8
(22) Date of filing: 29.07.2025
(51) Int. Cl.: H01M 4/131, H01M 4/36, H01M 4/62, H01M 4/1391, H01M 4/04, H01M 10/052, H01M 4/02

(54) **CATHODE FOR LITHIUM SECONDARY BATTERY, MANUFACTURING METHOD THEREFOR, AND LITHIUM SECONDARY BATTERY COMPRISING SAME**

(30) Priority: 29.07.2024 KR 20240100441; 28.07.2025 KR 20250102536
(71) Applicant: LG Energy Solution, Ltd., Seoul 07335 (KR)
(72) Inventor: KIM, Dong Hwi, Daejeon 34122 (KR); PARK, Jinseo, Daejeon 34122 (KR); LEE, Yung Jong, Daejeon 34122 (KR); KIM, Gunwoo, Daejeon 34122 (KR); JEONG, Mihee, Daejeon 34122 (KR); YUN, Kyung Sun, Daejeon 34122 (KR); RYU, Kihoon, Daejeon 34122 (KR); JEON, Hyelim, Daejeon 34122 (KR)
(74) Representative: Hoffmann Eitle
(86) International application number: PCT/KR2025/011268
(87) International publication number: WO 2026/029543

(57) **Abstract**

According to an embodiment of the present disclosure, provided is a positive electrode for lithium secondary battery, having a positive electrode mixture layer formed on one surface or both surfaces of a positive electrode current collector,
wherein the positive electrode mixture layer comprises a positive electrode active material and a conductive material mixture,
wherein the positive electrode active material has a carbon coating layer formed on its surface, and comprises a lithium compound represented by the following Formula 1, and
wherein the conductive material mixture comprises a first conductive material having a BET surface area of 50 m²/g to 70 m²/g and a second conductive material having a BET surface area of 100 m²/g to 300 m²/g, a method for manufacturing the same, and a lithium secondary battery comprising the same:

[Formula 1] Li₁₊ₐTi_{b}Mn_{c}O_{2-d}M

wherein, in Formula 1,
0.1≤a≤0.5, 0.3≤b≤0.5, 0.3≤c≤0.5, 1.1≤(1+a)/(b+c)≤1.5, 0≤d≤0.2, and
X is a halogen element.

## Description

### [TECHNICAL FIELD]

### Cross Citation with Related Application(s)

This application claims the benefit of benefit of priority to Korean Patent Application No. 10-2024-0100441, filed on July 29, 2024, and Korean Patent Application No. 10-2025-0102536, filed on July 28, 2025, the disclosures of which are incorporated herein by reference in their entirety.

The present disclosure relate to a positive electrode for lithium secondary battery, a method for manufacturing the same, and a lithium secondary battery comprising the same.

### [BACKGROUND]

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibit high energy density and operating potential, have a long cycle life, and a low self-discharge rate, and have been commercialized and widely used.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, numerous studies have been actively made to use a lithium secondary battery having a high energy density and a high discharge voltage, a part of which are in the commercializing stage.

A lithium secondary battery generally has a structure in which a non-aqueous electrolytic solution is impregnated into an electrode assembly including a positive electrode, a negative electrode and a porous separator. In general, the positive electrode is prepared by coating a positive electrode mixture including a positive electrode active material onto an aluminum foil, and the negative electrode is prepared by coating a negative electrode mixture including a negative electrode active material onto a copper foil.

Usually, the positive electrode active material is a lithium transition metal oxide, and the negative electrode active material is a carbon-based material.

However, recently, as lithium secondary batteries have been employed in various industrial fields, high-capacity and high-rate characteristics are being studied as important performance parameters, and consequently, attempts to develop a positive electrode active material capable of achieving such characteristics are being actively conducted.

One material that has recently been attracting attention as such a positive electrode active material is DRX (cation-disordered rock-salt transition metal oxide), which is a high-capacity material capable of exhibiting additional capacity through not only cation oxidation/reduction but also anion oxidation/reduction (oxygen redox).

However, such materials have problems such as gas emission during high-voltage operation of lithium secondary batteries, deterioration of lifetime characteristics due to an increase in material resistance, and improvement thereof remains a challenge.

Therefore, there is an urgent need to develop technologies that can solve these problems and achieve secondary battery performance such as high-capacity, high-rate, and excellent lifetime characteristics.

### [DETAILED DESCRIPTION OF THE INVENTION[]

### [Technical Problem]

It is an object of the present disclosure to provide a positive electrode that can enhance conductivity and thus improve capacity, lifetime and output characteristics, a method for manufacturing the same, and a lithium secondary battery comprising the same.

### [Technical Solution]

According to an aspect of the present disclosure, there is provided a positive electrode for lithium secondary battery, having a positive electrode mixture layer formed on one surface or both surfaces of a positive electrode current collector,
wherein the positive electrode mixture layer comprises a positive electrode active material and a conductive material mixture,
wherein the positive electrode active material has a carbon coating layer formed on its surface, and comprises a lithium compound represented by the following Formula 1, and
wherein the conductive material mixture comprises a first conductive material having a BET surface area of 50 m²/g to 70 m²/g and a second conductive material having a BET surface area of 100 m²/g to 300 m²/g:

   [Formula 1] Li₁₊ₐTi_{b}Mn_{c}O_{2-d}X_{d}
wherein, in Formula 1,
0.1≤a≤0.5, 0.3≤b≤0.5, 0.3≤c≤0.5, 1.1≤(1+a)/(b+c)≤1.5, 0≤d≤0.2, and
X is a halogen element.

The lithium compound is in the form of secondary particles, with the average diameter (D50) of the secondary particles being 0.5 to 1.5 micrometers, and the average diameter (D50) of the primary particles constituting the secondary particles being 10 to 100 nanometers.

The carbon coating layer may be included in an amount of 1 to 10 parts by weight based on 100 parts by weight of the lithium compound.

On the other hand, the first conductive material may have a BET surface area of 60 m²/g to 70 m²/g, and the second conductive material may have a BET surface area of 150 m²/g to 250 m²/g.

Here, both the first conductive material and the second conductive material may be a dot-type conductive material.

The conductive material mixture may comprise the first conductive material and the second conductive material in a weight ratio of 90:10 to 30:70, and the conductive material mixture may be included in an amount of 1 to 10% by weight based on the total weight of the positive electrode mixture layer.

The conductive material mixture may coat the surface of the positive electrode active material in a ratio of 50% by weight or more based on the total weight of the conductive material mixture.

Specifically, on the surface of the positive electrode active material, the first conductive material in the conductive material mixture may be located inside from the surface, and the second conductive material may be formed in the area where the first conductive material is not located and on the surface of the first conductive material.

On the other hand, the positive electrode mixture layer may further comprise a binder.

According to another aspect of the present disclosure, there is provided a method for manufacturing a positive electrode for lithium secondary battery, the method comprising the steps of: primarily ball-milling and baking an active material precursor and a carbon precursor, secondarily ball-milling the baked material and a conductive material mixture containing a first conductive material having a BET surface area of 50 m²/g to 70 m²/g, and a second conductive material having a BET surface area of 100 m²/g to 300 m²/g, and dispersing the resulting mixed powder in a solvent to prepare a slurry, and applying the slurry to one surface or both surfaces of a positive electrode current collector, followed by drying and rolling.

The active material precursor may be a lithium source, a manganese source, and a titanium source, and the carbon precursor may be one or more selected from the group consisting of citric acid and sucrose.

The conductive material mixture may be a mixture of a first conductive material and a second conductive material in a weight ratio of 90:10 to 30:70.

According to yet another aspect of the present disclosure, there is provided a lithium secondary battery comprising the positive electrode.

### [BRIEF DESCRIPTION OF THE DRAWINGS]

FIG. 1 is an SEM photograph according to Experimental Example 1.
FIG. 2 is a capacity comparison graph according to Experimental Example 2.

### [DETAILED DESCRIPTION OF THE EMBODIMENTS]

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

Meanwhile, the terms "consists of" and/or "consisting of" as used herein mean that in addition to the recited components, other components are not contained more than impurity levels, i.e., trace amounts.

As used herein, "specific surface area" is measured by a BET (Brunauer-Emmett-Teller) method, and particularly, may be calculated from the adsorption amount of nitrogen gas under a liquid nitrogen temperature(77K) by using BELSORP-mini II available from BEL Japan Inc.

According to an embodiment of the present disclosure, there is provided a positive electrode for lithium secondary battery, having a positive electrode mixture layer formed on one surface or both surfaces of a positive electrode current collector,
wherein the positive electrode mixture layer comprises a positive electrode active material and a conductive material mixture,
wherein the positive electrode active material has a carbon coating layer formed on its surface, and comprises a lithium compound represented by the following Formula 1, and
wherein the conductive material mixture comprises a first conductive material having a BET surface area of 50 m²/g to 70 m²/g and a second conductive material having a BET surface area of 100 m²/g to 300 m²/g:

   [Formula 1] Li₁₊ₐTi_{b}Mn_{c}O_{2-d}X_{d}
wherein, in Formula 1,
0.1≤a≤0.5, 0.3≤b≤0.5, 0.3≤c≤0.5, 1.1≤(1+a)/(b+c)≤1.5, 0≤d≤0.2, and
X is a halogen element.

### Positive electrode current collector

The positive electrode current collector is not particularly limited as long as it has conductivity without causing any chemical changes in a battery, and for example, copper, stainless steel, aluminum, nickel, titanium, backed carbon, or aluminum or stainless steel whose surface is treated with carbon, nickel, titanium, silver, or the like may be used as the current collector.

The positive electrode current collector may generally have a thickness of 3 µm to 500 µm, and may have fine protrusions and depressions formed on a surface thereof to enhance adherence of a positive electrode active material. For example, the current collector may be used in various forms such as a film, a sheet, a foil, a net, a porous body, a foaming body, and a non-woven fabric structure.

### Positive electrode mixture layer

The positive electrode mixture layer may comprise a positive electrode active material and a conductive material mixture.

The positive electrode active material may have a carbon coating layer formed on its surface, and comprise a lithium compound represented by the following Formula 1.

[Formula 1] Li₁₊ₐTi_{b}Mn_{c}O_{2-d}X_{d}

wherein, in Formula 1,
0.1≤a≤0.5, 0.3≤b≤0.5, 0.3≤c≤0.5, 1.1≤(1+a)/(b+c)≤1.5, 0≤d≤0.2, and
X is a halogen element.

Here, the lithium compound represented by Formula 1 may be DRX, and more specifically, b+c=0.8 in Formula 1.

In addition, 0.2≤a≤0.4, 0.3≤b≤0.5, and 0.3≤c≤0.5.

Most specifically, the lithium compound may be Li_{1.2}Ti_{0.4}Mn_{0.4}O₂.

This lithium compound may have the form of secondary particles having a structure in which primary particles are aggregated each other. Here, the average diameter (D50) of the secondary particles may be 0.5 to 1.5 micrometers, specifically, 0.7 to 1.2 micrometers.

Additionally, the average diameter (D50) of the primary particles constituting the secondary particles may be 10 to 100 nanometers, specifically 20 to 70 nanometers, and more specifically 30 to 60 nanometers.

The average particle diameter D50 means a diameter at a point of 50% in the cumulative distribution of volume according to the particle diameter. The D50 can be measured by using a laser diffraction method. Specifically, the particle size distribution can be measured by a process which includes dispersing the powder to be measured in a dispersion medium, introducing it into a commercially available laser diffraction particle size analyzer (e.g., Malvern Mastersizer 300), and then measuring the diffraction pattern difference according to the particle size when the particles pass through the laser beam. D50 can be measured by calculating the particle diameter corresponding a point of 50% in the cumulative distribution of the number of particles relative to the particle diameter in the analyzer.

The lithium compound may be used in a form in which a carbon coating layer is formed on its surface to enhance conductivity.

In this case, the carbon coating layer may be included in an amount of 1 to 10 parts by weight based on 100 parts by weight of the lithium compound. Specifically, the carbon coating layer may be included in an amount of 1 to 7 parts by weight, or 1 to 5 parts by weight, based on 100 parts by weight of the lithium compound.

If the content of the carbon coating layer is too small and falls outside the above range, a sufficient conductive network cannot be formed, which is not preferable. If the content of the carbon coating layer is too high, there is a problem that agglomeration occurs due to the phenomenon of these clustering together, which makes it impossible to achieve a uniform coating.

Meanwhile, the positive electrode active material may, in addition to the lithium compound, further include a compound capable of reversible intercalation and deintercalation of lithium, and examples thereof may include lithium metal oxide containing lithium and at least one metal such as cobalt, manganese, nickel or aluminum, specifically, lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., Li_{1+x'}Ni_{1-Y}Mn_{Y}O₂ (where - 0.5≤x'≤0.5, 0<Y<1), Li_{1+x"} Mn_{2-Z}Ni_{Z}O₄ (where -0.5≤x"≤0.5, and 0<Z<2), etc.), lithium-nickel-cobalt-based oxide (e.g., Li_{1+x‴}Ni_{1-Y1}Co_{Y1}O₂ (where -0.5≤x‴≤0.5, and 0<Y1<1), etc.), lithium-manganese-cobalt-based oxide (e.g., Li_{1+xʺʺ}Co_{1-Y2}Mn_{Y2}O₂ (where -0.5≤xʺʺ≤0.5, and 0<Y2<1), Li_{1+x‴ʺ}Mn_{2-Z1}Co_{Z1}O₄ (where -0.5≤x‴ʺ≤0.5, and 0<Z1<2), etc.), lithium-nickel-manganese-cobalt-based oxide (e.g., Li₁₊ₐ₁(NiₚCo_{q}Mnᵣ)O₂ (where -0.5≤a1≤0.5, 0<p<1, 0<q<1, 0<r<1, and p+q+r=1) or Li₁₊ₐ₂(Niₚ₁Co_{q1}Mnᵣ₁)O₄ (where -0.5≤a2≤0.5, 0<p1<2, 0<q1<2, 0<r1<2, and p1+q1+r1=2), etc.), or lithium-nickel-cobalt-transition metal(M) oxide (e.g., Li₁₊ₐ₃(Niₚ₂Co_{q2}Mnᵣ₂Mₛ₂)O₂ (where M is selected from the group consisting of Al, Fe, V, Cr, Ti, Ta, Mg and Mo, and , a3, p2, q2, r2 and s2 are atomic fractions of each independent elements, wherein 0.5≤a3≤0.5, 0<p2<1, 0<q2<1, 0<r2<1, 0<s2<1, and p2+q2+r2+s2=1), etc.), lithium iron phosphate oxide (e.g., Li₁₊ₐ₄Fe₁₋ₚ₃Mₚ₃(PO_{4-b4})X_{b4} (where M is at least one selected from Al, Mg, and Ti, X is at least one selected from F, S and N, -0.5≤a4≤0.5, 0≤p3≤0.5, 0≤b4≤0.1), or the like, and any one thereof or a mixture of two or more thereof may be used.

Of course, the lithium compound according to the present disclosure may be included as a main material, and based on the total amount of the positive electrode active material, the lithium compound according to the present disclosure may be included in an amount of 80% by weight or more, specifically 90% by weight or more and 100% by weight or less. The positive electrode active material alone can be included in an amount of 100% by weight.

On the other hand, due to the inherent properties of carbon, the carbon coating layer makes it difficult to achieve an even coating due to the phenomenon of agglomerating with each other rather than being uniformly distributed, and consequently, there is a problem that an excellent conductive network cannot be formed only by the formation of such a carbon coating layer.

Therefore, according to the present disclosure, in addition to the carbon coating layer, a conductive material may be further included to increase the conductivity of the active material. In this case, the conductive material may comprise a mixture of two types of conductive materials having different specific surface areas.

Specifically, the conductive material mixture may include a first conductive material having a BET surface area of 50 m²/g to 70 m²/g and a second conductive material having a BET surface area of 100 m²/g to 300 m²/g. Specifically, the first conductive material may have a BET surface area of 60 m²/g to 70 m²/g, and the second conductive material may have a BET surface area of 150 m²/g to 250 m²/g. More specifically, the first conductive material may have a BET surface area of 60 m²/g to 70 m²/g, and the second conductive material may have a BET surface area of 200 m²/g to 250 m²/g.

The first conductive material has a small specific surface area (BET), and may have an average diameter (D50) of 0.5 to 2 micrometers, or more specifically, 0.5 to 1.2 micrometers.

The first conductive material has a small specific surface area and a large size, which does not cause particle agglomeration, thereby serving to improve conductivity between the positive electrode active material particles.

However, the first conductive material may not sufficiently cover the surface of the positive electrode active material, and thus may incresse the resistance at the interface, whereby a sufficient conductivity improvement effect cannot be obtained with the first conductive material alone.

Therefore, according to the present disclosure, a second conductive material having a larger specific surface area may be further included as the conductive material.

The second conductive material has a large specific surface area and a small size, and thus can be densely located on the surface of the positive electrode active material, and can contribute improving conductivity in interspaces that are difficult to cover with the first conductive material.

The second conductive material may specifically have an average diameter (D50) of 2 to 10 micrometers, and more specifically, 2 to 5 micrometers.

The first and second conductive materials may include, for example, carbon powder such as carbon black, acetylene black, ketjen black, channel black, furnace black, lamp black, or thermal black; graphite powder such as natural graphite with a well-developed crystal structure, artificial graphite, or graphite; conductive fibers such as carbon nanotubes, carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives.

Here, the first conductive material may be a dot-type conductive material, and the second conductive material may be a linear conductive material.

Specifically, the first conductive material may be carbon black, and more specifically, super-P carbon black. The second conductive material may be acetylene black or carbon nanotubes.

The first conductive material and the second conductive material may be included in a weight ratio of 90:10 to 30:70. Specifically, the first conductive material and the second conductive material may be included in a weight ratio of 80:20 to 30:70, and more specifically, in a weight ratio of 80:20 to 60:40.

If the content of the first conductive material is too high and falls outside the above range, the contact area between the positive electrode active material and the conductive material mixture decreases, resulting in an increase in resistance. If the content of the second conductive material is too high, significant agglomeration of the second conductive material occurs, which also fails to properly coat the positive electrode active material, resulting in reduced conductivity.

The conductive material mixture may be included in an amount of 1 to 10% by weight, specifically 1 to 8% by weight, or more specifically 1 to 5% by weight, based on the total weight of the positive electrode mixture layer.

In this case, the conductive material mixture may be included in a form in which 50% by weight or more, specifically 60% by weight to 90% by weight, and more specifically 60% by weight to 80% by weight, based on the total weight of the conductive material mixture, coats the surface of the positive electrode active material.

More specifically, on the surface of the positive electrode active material, the first conductive material in the conductive material mixture may be located on the surface of the positive electrode active material, and the second conductive material may be formed in the area where the first conductive material is not located and on the surface of the first conductive material.

Therefore, a conductive network can be densely formed through the conductive material mixture containing two types of conductive materials without any empty spaces on the surface of the positive electrode active material according to the present disclosure, which exhibits better conductivity and reduces resistance, thereby enabling improvement of the overall performance of a lithium secondary battery including the same.

Meanwhile, the positive electrode mixture layer may further include a binder.

The binder is a component that assists in the binding between the positive electrode active material, the conductive material, and the positive electrode current collector. Examples of such a binder include polyvinylidene fluoride(PVDF), polyvinyl alcohol, carboxymethyl cellulose(CMC), starch, hydroxypropyl cellulose, regenerated cellulose, polyvinylpyrrolidone, polyethylene, polypropylene, an ethylene-propylene-diene monomer, a sulfonated ethylene-propylene-diene monomer, styrene-butadiene rubber, fluororubber, various copolymers thereof, and the like.

Typically, the binder may be included in an amount of 0.5 to 20% by weight, specifically 0.5 to 10% by weight, and more specifically 0.5 to 5% by weight, based on the total weight of the positive electrode mixture layer.

Additionally, the positive electrode mixture layer may further include other additives, and other additives may further include, for example, a filler or the like as a component for inhibiting the expansion. The filler is not particularly limited as long as it can inhibit the expansion of the electrode without causing any chemical change in the corresponding battery, and examples thereof may include olefinic polymers such as polyethylene and polypropylene; fibrous materials such as glass fibers and carbon fibers, and the like.

### Method for manufacturing positive electrode

The positive electrode for lithium secondary battery is manufactured by first preparing a slurry containing the positive electrode active material, applying it onto one surface or both surfaces of the positive electrode current collector, followed by drying and rolling.

Here, the slurry may be prepared by first preparing the positive electrode active material and then mixing the positive electrode active material and the conductive material mixture together.

More specifically, at least a part of the conductive material may be first mixed with the positive electrode active material through dry mixing, more specifically, high-shear dry mixing and then the remaining conductive material mixture may be simply mixed with other components of the positive electrode mixture layer under a solvent.

Meanwhile, the method for preparing a lithium compound as the positive electrode active material is not limited, and it can be prepared by a solid-phase method., but specifically, it can be prepared by baking a mixture containing an active material precursor and a carbon precursor.

In this case, the mixture may further include additives, such as a surface modifier, as needed.

Here, the active material precursor is a component constituting the lithium compound represented by Formula 1, and may be a lithium source, a manganese source, or a titanium source.

The lithium source may be one or more materials selected from lithium carbonate, lithium hydroxide, and lithium phosphate, and more specifically, lithium hydroxide (LiOH).

The manganese source may be one or more materials selected from manganese sulfate, manganese nitrate, manganese carbonate, manganese acetate, manganese chloride, manganese hydroxide, manganese oxide, and manganese phosphate, and more specifically, manganese oxide (MnO₂).

The titanium source may be one or more materials selected from titanium sulfate, titanium nitrate, titanium carbonate, titanium acetate, titanium chloride, titanium hydroxide, titanium oxide, and titanium phosphate, and more specifically, titanium oxide (TiO₂).

Further, in order to enhance the conductivity of these active materials, the carbon precursor is introduced together from the synthesis stage of the lithium compound.

In this case, the carbon precursor may be one or more materials selected from citric acid, glucose, sucrose, graphite, carbon nanotubes, and carbon black, and more specifically, it may be one or more selected from the group consisting of citric acid and sucrose.

Such precursors may be mixed and then baked, wherein the mixing may be performed by ball-milling. The ball-milling mixing may be performed, specifically, by dry mixing. More specifically, the mixing may be performed by mixing the precursors with zirconia balls or the like and milling the mixture.

Subsequently, when sufficient mixing is performed, the mixture can be baked to synthesize a lithium compound.

In this case, the baking may be performed at a temperature ranging from 650 to 1200°C for 6 to 30 hours under an inert atmosphere. Alternatively, the baking may be performed in two steps. For example, the first step may be performed at a temperature ranging from 500 to 800°C for 1 to 6 hours under an inert atmosphere, and the second step may be performed at a temperature ranging from 800 to 1200°C for 6 to 20 hours under an inert atmosphere.

The lithium compound prepared by the solid-phase method may be obtained in the form in which carbon is coated onto the surface of the lithium compound represented by Formula 1 including lithium, manganese, and titanium.

After the lithium compound is prepared in the manner, a slurry containing the lithium compound as a positive electrode active material can be prepared.

In this case, the positive electrode active material and the conductive material mixture can be directly mixed in a solvent. However, more specifically, in order to further enhance the conductive network of the positive electrode active material according to the present disclosure, it is more preferable that the conductive material mixture is present in the form of a coating on the surface of the positive electrode active material.

Therefore, in this case, the prepared positive electrode active material and the conductive material mixture, which is a mixture of the first and second conductive materials, are first mixed by secondary ball-milling, and the resulting mixed powder may be then dispersed in a solvent to prepare a slurry.

The conductive material mixture may include the first conductive material and the second conductive material in a weight ratio of 90:10 to 30:70 as described above. Specifically, the mixture may include the first conductive material and the second conductive material in a weight ratio of 80:20 to 30:70, and more specifically, may include the first conductive material and the second conductive material in a weight ratio of 80:20 to 60:40.

Further, the secondary ball-milling may also be dry mixing, and more specifically, high-shear dry mixing.

Through this secondary ball-milling, the conductive material mixture can be coated while forming a layer on the surface of the positive electrode active material, thereby exhibiting further improved conductivity.

Further, the amount of the conductive material mixture added during the secondary ball-milling may be 50% by weight or more, specifically 60% by weight to 90% by weight, and more specifically 60% by weight to 80% by weight, of the amount of the conductive material mixture contained in the final positive electrode mixture layer.

If the entire conductive material mixture is not added during the secondary ball-milling, the remaining conductive material mixture may be added when the mixed powder is dispersed in a solvent.

Furthermore, when the mixed powder is dispersed in a solvent, a binder and other additives can be added together.

### Lithium secondary battery

Meanwhile, according to another aspect of the present disclosure, a lithium secondary battery comprising the positive electrode is provided.

The lithium secondary battery has a structure in which an electrode assembly including the positive electrode, the negative electrode, and a separator are incorporated into a secondary battery case together with an electrolyte.

Here, the negative electrode has a structure in which a negative electrode mixture layer containing a negative electrode active material is formed on one surface or both surfaces of a negative electrode current collector. In addition to the negative electrode active material, the negative electrode mixture layer may further include electrode materials such as a conductive material and a binder as described for the positive electrode.

The negative electrode current collector is not particularly limited so long as it does not cause chemical changes in the corresponding battery and has conductivity, and for example, copper, stainless steel, aluminum, nickel, titanium, baked carbon, copper or stainless steel whose surface is treated with carbon, nickel, titanium, silver, or the like, an aluminum-cadmium alloy, or the like may be used.

The negative electrode current collector may typically have a thickness of 3 µm to 500 µm. Similarly to the positive electrode current collector, the negative electrode current collector may have fine protrusions and depressions formed on the surface thereof to enhance the bonding force of the negative electrode active material. For example, the negative electrode current collector may be used in various forms such as a film, a sheet, a foil, a net, a porous body, a foaming body, and a nonwoven fabric structure.

The negative electrode active material may include a lithium metal, a carbon material capable of reversibly intercalating/deintercalating lithium ions, metals or alloys of lithium and these metals, a metal composite oxide, a material capable of doping and de-doping lithium, and a transition metal oxide.

The carbon material capable of reversibly intercalating/deintercalating lithium ions may be used without particular limitation so long as it is a carbon-based negative electrode active material generally used in a lithium ion secondary battery, and, as a typical example thereof, crystalline carbon, amorphous carbon, or both thereof may be used. Examples of the crystalline carbon may be graphite such as amorphous, planar, flaky, spherical, or fibrous natural graphite or artificial graphite, and examples of the amorphous carbon may be soft carbon (low-temperature baked carbon) or hard carbon, mesophase pitch carbide, baked cokes, and the like.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

As the metal composite oxide, at least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LixFe₂O₃ (where 0≤x≤1), LiₓWO₂ (where 0≤x≤1) and SnₓMe₁₋ₓMe'_{y}O_{z} (where Me: Mn, Fe, Pb, Ge; Me': Al, B, P, Si, Group I, II and III elements of the periodic table, halogen; 0<x≤1; 1≤y≤3; 1≤z≤8) may be used.

The material which may be doped and undoped with lithium may include Si, SiOₓ (where 0<x≤2), Si-Y alloy (wherein Y is an element selected from the group consisting of an alkali metal, an alkaline earth metal, a Group 13 element, a Group 14 element, a transition metal, a rare earth element, and a combination thereof, and is not Si), Sn, SnO₂, Sn-Y (wherein Y is an element selected from the group consisting of an alkali metal, an alkaline earth metal, a Group 13 element, a Group 14 element, a transition metal, a rare earth element, and a combination thereof, and is not Sn), or the like., and at least one of these may be mixed and used with SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include a lithium-containing titanium composite oxide (LTO), vanadium oxide, lithium vanadium oxide, and the like.

The negative electrode active material may be included in an amount of 60 to 99% by weight, preferably 80 to 99% by weight, and more preferably 90 to 98% by weight, based on the total weight of the negative electrode mixture layer.

When the metal itself is used without forming a negative electrode mixture layer on the negative electrode, it can be prepared by a method of physically joining, rolling, or depositing a metal on the metal thin film itself or the negative electrode current collector. As the deposition method, an electrical deposition method or a chemical vapor deposition method of the metal may be used.

For example, the metal thin film itself or the metal joined/rolled/deposited on the negative electrode current collector may include one type of metal selected from the group consisting of lithium(Li), nickel(Ni), tin(Sn), copper(Cu), and indium(In), or an alloy of two types thereof.

The separator can be used without particular limitation as long as it is commonly used as a separator in a lithium secondary battery, and those having an excellent electrolyte liquid moisture-containing ability while having low resistance against ion migration of the electrolyte liquid are particularly preferred.

For example, as the separator, a porous polymer film including a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. Further, a typical porous nonwoven fabric, for example, a nonwoven fabric made of a glass fiber having a high melting point, a polyethylene terephthalate fiber or the like can be used as the separator.

Alternatively, it may be an SRS (Safety Reinforced Separator) separator having a structure in which a coating layer containing a binding material and inorganic particles is formed on one surface or both surfaces of the polymer substrate as described above.

The inorganic particles enable formation of empty spaces between inorganic particles and thus play role of a spacer that forms micropores and keeps a physical shape as well. Because the inorganic particles generally have a characteristic that does not change physical properties even at a temperature as high as 200°C or above, the formed organic/inorganic mixture layer has excellent thermal resistance.

The inorganic particles are not particularly limited as long as they are stable electrochemically. That is, the inorganic particles that can be used in the present disclosure is not particularly limited if an oxidization and/or a reduction reaction does not occur in an operating voltage range of a battery in use. In particular, when the inorganic particles having an ion transfer ability are used, it is possible to increase the ion conductivity and facilitate performance enhancement within the electrochemical device, and thus, if possible, those having higher ionic conductivity are preferred. Further, when the inorganic particles have a high density, not only is it difficult to disperse during manufacturing, but also there are problems with weight increase during secondary battery manufacturing, and therefore, if possible, the inorganic particles with a lower density may be preferred. Further, the inorganic particles having a high dielectric constant may contribute to increasing the dissociation degree of the electrolyte salt, such as lithium salt, in the liquid electrolyte, thereby enhancing the ionic conductivity of the electrolyte. Finally, inorganic particles having thermal conductivity have excellent heat absorption ability, and thus, heat is locally concentrated to form heat generating points, thereby suppressing phenomena that lead to thermal runaway, which is more preferable.

For the foregoing reasons, the inorganic particles may be preferably at least one type selected from the group consisting of (a) inorganic particles having a high dielectric constant, of which the dielectric constant is 1 or more, 5 or more, preferably 10 or more, (b) inorganic particles having piezoelectricity, (c) thermally conductive inorganic particles and (d) inorganic particles having lithium ion transferring capability.

The piezoelectric inorganic particles refer to a material which is nonconducting under a normal pressure, but exhibits electrically conducting property due to changes of internal structure when a certain pressure is applied thereto. It is a material that has not only a high dielectric constant characteristic such as a dielectric constant of 100 or more, but also a function of generating electric potential between both side surfaces when one surface is charged positive and the opposite surface is charged negative with charges generated when the piezoelectric material is tensioned or compressed by a certain pressure exerted thereto.

Examples of the inorganic particles having piezoelectricity may include BaTiO₃, Pb(Zr,Ti)O₃ (PZT), Pb₁₋ₓLaₓZr_{1-y}Ti_{y}O₃ (PLZT), Pb(Mg₃Nb_{2/3})O₃-PbTiO₃ (PMN-PT) hafnia (H_{f}O₂) or a mixture thereof, but not limited hereto.

The inorganic particles having lithium ion transferring capability refer to inorganic particles that contain lithium atoms and have a function of moving a lithium ion without storing the lithium. The inorganic particles having lithium ion transferring capability may transfer and move lithium ions due to a kind of defect existing in the particle structure, so it is possible to prevent a decrease in lithium mobility and thus prevent a decrease in battery capacity.

Examples of the inorganic particles having lithium ion transferring capability may include lithium phosphate(Li₃PO₄), lithium titanium phosphate(LiₓTi_{y}(PO₄)₃, 0<x<2, 0<y<3), lithium aluminum titanium phosphate(LiₓAl_{y}Ti_{z}(PO₄)₃, 0<x<2, 0<y<1, 0<z<3), (LiAlTiP)ₓO_{y}-based glass(0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate(LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂-based glass (LiₓSi_{y}S_{z}, 0<x<3, 0<y<2, 0<z<4) such as Li₃PO₄-Li₂S-SiS₂, P₂S₅-based glass(LiₓP_{y}S_{z}, 0<x<3, 0<y<3, 0<z<7) such as LiI-Li₂S-P₂S₅, or a mixture thereof, but not limited hereto.

Further, examples of the inorganic particles having a dielectric constant of 1 or more may be SrTiO₃, SnO₂, CeO₂, MgO, NiO, CaO, ZnO, ZrO₂, Y₂O₃, Al₂O₃, TiO₂, SiC or a mixture thereof, but not limited hereto.

The thermally conductive inorganic particles are materials that provides low thermal resistance but does not provide electrical conductivity and thus has insulating properties, and an example thereof may be at least one selected from the group consisting of aluminum nitride(AlN), boron nitride(BN), alumina(Al₂O₃), silicon carbide(SiC), and beryllium oxide(BeO), but not limited thereto.

When the above-mentioned high-dielectric constant inorganic particles, inorganic particles having piezoelectricity, thermally conductive inorganic particles, and inorganic particles having lithium ion transferring capability are used in combination, synergistic effects of these can be doubled.

The size of the inorganic particle is not limited, but to ensure appropriate porosity between the inorganic particles, the preferable size is within the range of 0.001 to 10 µm if possible. When the size is less than 0.001 µm, dispersion is deteriorated, and physical properties are difficult to adjust. When the size is greater than 10 µm, a thickness increases, and mechanical property is deteriorated. Further, because of an excessively large pore size, the role of a coating layer is not sufficiently performed, and possibility in which internal short circuit occurs at charging and discharging of the battery is increased.

The content of the inorganic particles is not particularly limited, but is preferably in the range of 1 to 99% by weight, especially 10 to 95% by weight, based on 100% by weight of the mixture of the inorganic particles and the binding material. If the content of the inorganic particles is less than 1% by weight, the content of the binding material may be too high so that the pore size and porosity are reduced due to a decrease in the empty space formed between inorganic particles, thereby reducing the mobility of lithium ions. On the other hand, when the content exceeds 99% by weight, the content of the binding material is too small, so the adhesive force between inorganic materials becomes weak and thus the mechanical properties of the coating layer are deteriorated.

Meanwhile, the binding material is not limited as long as it does not cause a side reaction with the electrolyte solution, but in particular, a binding material with a glass transition temperature(Tg) as low as possible can be used, and the temperature is preferably in the range of -200 to 200°C. This is because the mechanical properties of the final insulating film can be improved.

Further, the binding material does not necessarily have to have ion conduction ability, but it is more preferable to use a polymer having ion conduction ability.

Therefore, the binding material preferably has a high dielectric constant if possible. Actually, since the degree of dissociation of a salt in an electrolyte depends on the dielectric constant of the electrolyte solvent, the higher the dielectric constant of the polymer, the more the degree of salt dissociation in the electrolyte can be improved. The dielectric constant of the polymer may be 1 or more, specifically in the range of 1.0 to 100 (measurement frequency = 1 kHz), and particularly preferably 10 or more.

In addition to the foregoing functions, the binding material may have characteristic which can exhibit a high electrode impregnation (degree of swelling) by gelation when being impregnated into the liquid electrolyte. When the binding material has actually excellent electrode impregnation, the electrolyte injected after the battery is assembled may permeates into the polymer, and the polymer containing the absorbed electrolyte has an electrolyte ion conducting ability. Therefore, if possible, a polymer with a solubility parameter of 15 to 45 MPa^{1/2} is preferred, and the ranges of 15 to 25 MPa^{1/2} and 30 to 45 MPa^{1/2} are more preferred. When the solubility parameter is less than 15 MPa^{1/2} and more than 45 MPa^{1/2}, it becomes difficult to be impregnated (swelled) by a typical liquid electrolyte for batteries.

Examples of the binding material include at least one selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose and polyvinylalcohol.

The total thickness of the separator may be 5 micrometers to 20 micrometers, specifically 5 micrometers to 15 micrometers, and more specifically 6 micrometers to 13 micrometers. If the thickness of the separator satisfies the above range, it is possible to effectively prevent short circuits between the positive electrode and the negative electrode while minimizing the resistance value of the lithium secondary battery. As a result, it is possible to prevent a decrease in energy density of lithium secondary batteries and improve lifetime characteristics.

The electrolyte may be a lithium non-aqueous electrolyte, and the lithium non-aqueous electrolyte may include a lithium salt and a non-aqueous organic solvent.

In this case, the lithium salt is used as a medium for transferring ions within a lithium secondary battery. For example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂) or a mixture of two or more, but in terms of excellent stability, it is preferable to include LiN(SO₂CF₃)₂.

In addition to these, the lithium salt commonly used in an electrolyte of a lithium secondary battery can be used without particular limitation.

The concentration of the lithium salt can be appropriately changed within a generally usable range, but the lithium salt may be included in the electrolyte at a concentration of 0.5 M to 3 M, specifically at a concentration of 1 M to 2.5 M, and more specifically, at a concentration of 1 M to 2 M, in order to obtain an optimal effect of forming a coating film for preventing corrosion on the electrode surface. When the concentration of the lithium salt satisfies the above range, the effect of improving cycle characteristics during high-temperature storage of the lithium secondary battery is sufficient, and the viscosity of the electrolyte is appropriate, so that electrolyte impregnation can be improved.

The non-aqueous organic solvent is not limited as long as it may minimize decomposition due to an oxidation reaction or the like in the charge/discharge process of the lithium secondary battery, and may exhibit desired characteristics together with an additive. For example, a carbonate-based organic solvent, an ether-based organic solvent, an ester-based organic solvent, and the like may be used alone or in mixture of two or more thereof, and specifically, a carbonate-based organic solvent may be used.

The carbonate-based organic solvent among the organic solvents may include at least one selected from the group consisting of a cyclic carbonate-based organic solvent and a linear carbonate-based organic solvent. Specifically, the cyclic carbonate-based organic solvent may include at least one selected from the group consisting of ethylene carbonate(EC), propylene carbonate (PC), 1,2-butylene carbonate, 2,3-butylene carbonate, 1,2-pentylene carbonate, 2,3-pentylene carbonate, vinylene carbonate, vinylethylene carbonate, and fluoroethylene carbonate(FEC). Specifically, it may include a mixed solvent of ethylene carbonate having a high dielectric constant and propylene carbonate having a relatively low melting point compared to ethylene carbonate.

Further, the linear carbonate-based organic solvent is a solvent having low viscosity and low dielectric constant, and may include at least one selected from the group consisting of dimethyl carbonate(DMC), diethyl carbonate(DEC), dipropyl carbonate, ethyl methyl carbonate(EMC), methylpropyl carbonate, and ethylpropyl carbonate, and, more specifically, it may include dimethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, low dielectric constant linear carbonate-based compound, such as dimethyl carbonate and diethyl carbonate in an appropriate ratio, a gel-type electrolyte having high electrical conductivity may be prepared, which may be more preferably used.

Moreover, the lithium non-aqueous electrolyte may further include a functional additive, and the functional additive may be included in order to prevent the negative electrode from causing collapse of a negative electrode in a high power environment, or to further improve the low temperature high rate discharge characteristics, high temperature stability, overcharge prevention, battery expansion suppression effect during high-temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3% by weight to 5% by weight, and specifically 1% by weight to 5% by weight based on the total weight of the gel-type electrolyte. In a case in which the amount of the sultone-based compound in the gel-type electrolyte is greater than 5% by weight, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3% by weight or less based on the total weight of the gel-type electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3% by weight or less based on the total weight of the gel-type electrolyte.

The sulfate-based compound may include ethylene sulfate(Esa), trimethylene sulfate(TMS), or methyl trimethylene sulfate(MTMS), and may be included in an amount of 3% by weight or less based on the total weight of the gel-type electrolyte.

Further, the halogen-substituted carbonate-based compound may include fluoroethylene carbonate(FEC), and may be included in an amount of 5% by weight or less based on the total weight of the gel-type electrolyte. In a case in which the amount of the halogen-substituted carbonate-based compound in the gel-type electrolyte is greater than 5% by weight, the cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3% by weight or less based on the total weight of the gel-type electrolyte. If the content of the cyclic carbonate-based compound in the gel-type electrolyte is greater than 3% by weight, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(2,2,2-trifluoroethyl)phosphite, and may be included in an amount of 3% by weight or less based on the total weight of the gel-type electrolyte.

The borate-based compound may include lithium oxalyldifluoroborate, and may be included in an amount of 3% by weight or less based on the total weight of the gel-type electrolyte.

The lithium salt-based compound is a compound different from the lithium salt included in the lithium non-aqueous electrolyte. The lithium salt-based compound may include at least one compound selected from the group consisting of LiPO₂F₂, LiODFB, LiBOB (lithium bisoxalate borate(LiB(C₂O₄)₂), and LiBF₄, and may be included in an amount of 3% by weight or less based on the total weight of the lithium non-aqueous electrolyte.

Two or more kinds of the functional additives may be mixed, and included in an amount of 20% by weight or less, specifically 0.1% by weight to 10% by weight, based on the total weight of the lithium non-aqueous electrolyte. If the content of the functional additive is greater than 20% by weight, there is a possibility that excessive side reactions in the lithium non-aqueous electrolyte may occur during charge and discharge of the battery. In particular, it is not sufficiently decomposed at high temperatures, and may exist as an unreacted material or in a precipitated state in the lithium non-aqueous electrolyte at room temperature. Thereby, side reactions may occur in which the lifetime or resistance characteristics of the lithium metal battery are reduced.

Hereinafter, the lithium secondary battery according to an embodiment of the present disclosure will be described with reference to Examples in order to demonstrate that it exhibits improved effects.

### <Preparation Example>

The active material raw materials of LiOH, MnO₂, and TiO₂ were mixed at a molar ratio of 3:1:1 in accordance with the stoichiometric ratio under an Ar atmosphere, and sucrose was added for improving the conductivity so that the content in the final positive electrode active material was 8 wt.% to thereby prepare a mixed powder.

The mixed powder was prepared by placing the active material raw materials and sucrose in a zirconia container, using bimodal zirconia balls (10 mm, 5 mm, large diameter/small diameter weight ratio = 0.1, 1.5 times the weight of the mixed powder), purging with Ar for 1 hour, milling at 350 rpm for 1 hour, resting for 30 minutes, and repeating the milling cycle 12 times.

Subsequently, the mixed powder, in which the mixing was completed as described above, was heat-treated using a tube furnace under an Ar atmosphere. The heat treatment was performed at 600°C for 3 hours and then at 900°C for 12 hours at a heating rate of 5°C/min.

Thereby, a lithium compound (Li_{1.2}Ti_{0.4}Mn_{0.4}O₂) formed with a carbon coating layer was prepared.

### <Example 1>

The lithium compound prepared in Preparation Example, and a conductive material mixture of Super-P (BET: 63 m²/g) as a first conductive material and CNT (bundle type, BET: 230 m²/g) as a second conductive material in a weight ratio of 90:10, were all placed in a zirconia container at a weight ratio of 89:1. The mixed powder was then obtained by using bimodal zirconia balls (10 mm, 5 mm, large diameter/small diameter weight ratio = 0.1, 1.5 times the weight of the mixed powder), purging with Ar for 1 hour, milling at 350 rpm for 1 hour, resting for 30 minutes, and repeating the secondary milling cycle 12 times.

Subsequently, the resulting mixed powder and the binder were mixed in a weight ratio of 90:10 in an NMP solvent to prepare a positive electrode slurry. This positive electrode slurry was coated in a thickness of 60 micrometers onto one surface of an aluminum current collector (thickness: 12 µm), followed by drying (130°C) and rolling (porosity: 30 vol.%) to manufacture a positive electrode.

### <Example 2>

A positive electrode was manufactured in the same manner as in Example 1, except that a conductive material mixture of Super-P as a first conductive material and CNT as a second conductive material in a weight ratio of 80:20 was used in Example 1.

### <Example 3>

A positive electrode was manufactured in the same manner as in Example 1, except that a conductive material mixture of Super-P as a first conductive material and CNT as a second conductive material in a weight ratio of 70:30 was used in Example 1.

### <Example 4>

A positive electrode was manufactured in the same manner as in Example 1, except that a conductive material mixture of Super-P as a first conductive material and CNT as a second conductive material in a weight ratio of 30:70 was used in Example 1.

### <Comparative Example 1>

A positive electrode was manufactured in the same manner as in Example 1, except that only the first conductive material Super-P was used instead of the conductive material mixture in Example 1.

### <Comparative Example 2>

A positive electrode was manufactured in the same manner as in Example 1, except that only the second conductive material CNT was used instead of the conductive material mixture in Example 1.

### <Comparative Example 3>

A positive electrode was manufactured in the same manner as in Example 1, except that a conductive mixture of the first conductive material Super-P and the third conductive material GNP (Graphene Nano Plate, BET 600 m²/g) in a weight ratio of 40:60 was used instead of the conductive material mixture in Example 1.

### <Comparative Example 4>

A positive electrode was manufactured in the same manner as in Example 1, except that a conductive mixture of the first conductive material Super-P and the third conductive material GNP (Graphene Nano Plate, BET 600 m²/g) in a weight ratio of 30:70 was used instead of the conductive material mixture in Example 1.

### <Experimental Example 1>

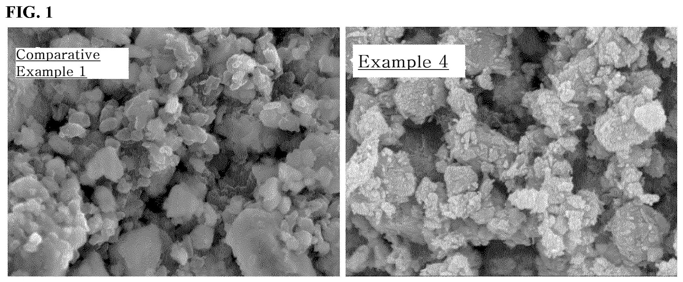

SEM images of the mixed powders of the lithium compound and conductive material mixture prepared in Example 4 and Comparative Example 1 were taken and shown in FIG. 1.

Referring to these images, it can be confirmed that in the mixed powder of Example 4, the conductive material mixture was more densely formed on the surface of the lithium compound.

### <Experimental Example 2>

A lithium metal foil was used as the negative electrode, and a separator (polyethylene) was interposed between the positive electrode and the negative electrode manufactured in Examples 1 to 4 and Comparative Examples 1 to 4 to prepare an electrode assembly, and an electrolyte prepared by dissolving LiPF₆ at 1.0 M in a non-aqueous organic solvent having a composition of ethylene carbonate (EC): ethyl methyl carbonate (EMC) = 50:50 (volume ratio) was injected into the electrode assembly to produce a half-cell.

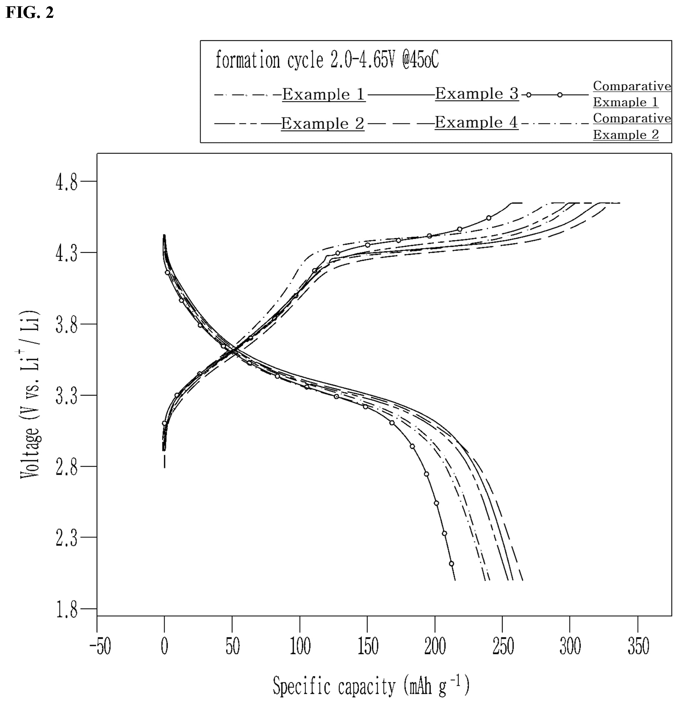

The half-cell was charged with a constant current of 0.1C at 45°C until the voltage reached 4.65V, and discharged with a constant current of 0.1C until the voltage reached 2.0V. The initial charge capacity and initial discharge capacity obtained therefrom are shown in FIG. 2 and Table 1 below, and the ratio of the initial discharge capacity to the initial charge capacity is shown in Table 1 below as the initial efficiency.

In addition, the battery capacity was measured while repeating the charge/discharge cycle 50 times in the range of 2.5~4.45V at 0.1C at 45°C, and the capacity ratio at the 50th cycle relative to the 1st cycle is shown in Table 1 below as the capacity retention.

### <Experimental Example 3>

The initial resistance and resistance increase rate of the half-cells produced in Experimental Example 2 were measured, and the results are shown in Table 1 below.

Specifically, the half-cell was charged with a constant current of 1C at 25°C until the voltage reached 4.4 V, allowed to stand for 10 seconds, and discharged with a constant current of 1C until the voltage reached 2.5V.

The initial voltage was measured using a PNE-0506 charge/discharge equipment (manufacturer: PNE SOLUTION, 5 V, 6 A), and the resistance values were calculated therefrom.

**[Table 1]**

| | Content of conductive material 1 (wt%) | Content of conductive material 2 (wt%) | Content of conductive material 3 (wt%) | Arithmet ic BET | Initial charge capacity (mAh/g) | Initial discharge capacity (mAh/g) | Initial efficiency( %) | Capacity retention( %) | Initial resistance (mohm) |
|---|---|---|---|---|---|---|---|---|---|
| Example1 | 0.9 | 0.1 | | 79.7 | 316.45 | 240.36 | 75.96 | 68.5 | 71.2 |
| Example2 | 0.8 | 0.2 | | 96.4 | 307.15 | 253.93 | 82.67 | 70.2 | 65.3 |
| Example3 | 0.7 | 0.3 | | 113.1 | 327.68 | 257.47 | 78.57 | 72.2 | 60.2 |
| Example4 | 0.3 | 0.7 | | 179.9 | 336.81 | 264.39 | 78.50 | 78 | 48.6 |
| Comparative Example1 | 1 | - | | 63 | 264.49 | 214.87 | 81.24 | 62.1 | 90.6 |
| Comparative Example2 | - | 1 | | 230 | 295.41 | 237.30 | 80.33 | 64.5 | 63.2 |
| Comparative Example3 | 0.4 | | 0.6 | 385 | 294.3 | 223.5 | 75.9 | 61.2 | 100.3 |
| Comparative Example4 | 0.3 | | 0.7 | 439 | 290.5 | 218.4 | 75.2 | 54.2 | 120.8 |

Referring to Table 1 and FIG. 2, it can be confirmed that the lithium secondary battery using a conductive material mixture according to the present disclosure exhibits desirable effects when considering both capacity retention and resistance aspects.

Based on the above disclosure, various applications and modifications can be carried out by those of ordinary skill in the art without deviating from the spirit and scope of the present disclosure.

### [Industrial Applicability]

The positive electrode for a lithium secondary battery according to an embodiment of the present disclosure includes two types of conductive materials having different specific surface areas, thereby enhancing conductivity and providing effects that can improve capacity, lifetime and output characteristics.

## Claims

1. A positive electrode for lithium secondary battery, having a positive electrode mixture layer formed on one surface or both surfaces of a positive electrode current collector,
wherein the positive electrode mixture layer comprises a positive electrode active material and a conductive material mixture,
wherein the positive electrode active material has a carbon coating layer formed on its surface, and comprises a lithium compound represented by the following Formula 1, and
wherein the conductive material mixture comprises a first conductive material having a BET surface area of 50 m²/g to 70 m²/g and a second conductive material having a BET surface area of 100 m²/g to 300 m²/g:
[Formula 1] Li₁₊ₐTi_{b}Mn_{c}O_{2-d}X_{d}
wherein, in Formula 1,
0.1≤a≤0.5, 0.3≤b≤0.5, 0.3≤c≤0.5, 1.1≤(1+a)/(b+c)≤1.5, 0≤d≤0.2, and
X is a halogen element.

2. The positive electrode according to claim 1,
wherein the lithium compound is in the form of secondary particles, with the average diameter (D50) of the secondary particles being 0.5 to 1.5 micrometers, and the average diameter (D50) of the primary particles constituting the secondary particles being 10 to 100 nanometers.

3. The positive electrode according to claim 1,
wherein the carbon coating layer is included in an amount of 1 to 10 parts by weight based on 100 parts by weight of the lithium compound.

4. The positive electrode according to claim 1,
wherein the first conductive material has a BET surface area of 60 m²/g to 70 m²/g, and the second conductive material has a BET surface area of 150 m²/g to 250 m²/g.

5. The positive electrode according to claim 1,
wherein the first conductive material is a dot-type conductive material, and the second conductive material is a linear conductive material.

6. The positive electrode according to claim 1,
wherein the conductive material mixture comprises the first conductive material and the second conductive material in a weight ratio of 90:10 to 30:70.

7. The positive electrode according to claim 1,
wherein the conductive material mixture is included in an amount of 1 to 10% by weight based on the total weight of the positive electrode mixture layer.

8. The positive electrode according to claim 1,
wherein the conductive material mixture coats the surface of the positive electrode active material in a ratio of 50% by weight or more based on the total weight of the conductive material mixture.

9. The positive electrode according to claim 8,
wherein on the surface of the positive electrode active material, the first conductive material in the conductive material mixture is located inside from the surface, and the second conductive material is formed in the area where the first conductive material is not located and on the surface of the first conductive material.

10. The positive electrode according to claim 1,
wherein the positive electrode mixture layer further comprises a binder.

11. A method for manufacturing the positive electrode for lithium secondary battery as set forth in claim 1, the method comprising the steps of:
primarily ball-milling and baking an active material precursor and a carbon precursor, secondarily ball-milling the baked material and a conductive material mixture containing, a first conductive material having a BET surface area of 50 m²/g to 70 m²/g, and a second conductive material having a BET surface area of 100 m²/g to 300 m²/g, and dispersing the resulting mixed powder in a solvent to prepare a slurry, and
applying the slurry to one surface or both surfaces of a positive electrode current collector, followed by drying and rolling.

12. The method for manufacturing a positive electrode according to claim 11,
wherein the active material precursor is a lithium source, a manganese source, and a titanium source.

13. The method for manufacturing a positive electrode according to claim 11,
wherein the carbon precursor is one or more selected from the group consisting of citric acid and sucrose.

14. The method for manufacturing a positive electrode according to claim 11,
wherein the conductive material mixture is a mixture of a first conductive material and a second conductive material in a weight ratio of 90:10 to 30:70.

15. A lithium secondary battery comprising the positive electrode as set forth in claim 1.
